# EUROPÄISCHE PATENTSCHRIFT

(11) **EP 0 544 165 B1**
(45) Veröffentlichungstag und Bekanntmachung des Hinweises auf die Patenterteilung: **05.06.1996**
(21) Anmeldenummer: 92119492.4
(22) Anmeldetag: 13.11.1992
(51) Int. Cl.: C08G 73/06, C08G 73/10, H01B 3/30

(54) **Phenylchinoxalin-Copolymere**
Phenylquinoxaline copolymers
Copolymères de phénylquinoxaline

(30) Priorität: 26.11.1991 DE 4138862
(43) Veröffentlichungstag der Anmeldung: 02.06.1993
(73) Patentinhaber: SIEMENS AKTIENGESELLSCHAFT, D-80333 München (DE)
(72) Erfinder: Ahne, Hellmut, Dr., W-8551 Röttenbach (DE); Zapf, Lothar, Dr., W-8755 Alzenau (DE)

(56) Entgegenhaltungen:
- EP-A- 0 420 417
- WO-A-90/15836
- US-A- 4 788 271
- US-A- 4 908 426

## Beschreibung

Für die Verwendung als Dielektrika bei Mehrlagenverschaltungen mit hoher Schaltgeschwindigkeit weisen Polyphenylchinoxaline - gegenüber den gängigen hochwärmebeständigen Schutz- und Isolierschichten auf Polyimidbasis (siehe dazu: "35th Electronic Components Conference", Washington (USA), May 20-22 (1985) - Konferenzbericht 1985, Seiten 192 bis 198) - bessere thermische und elektrische Eigenschaften auf (siehe dazu: "First European Technical Symposium on Polyimides", Montpellier, May 10-11 (1989) - Proceedings Vol. 1, Seiten B-2/1 bis B-2/12). Um die Polymeren zu den dabei erforderlichen dünnen Schichten verarbeiten zu können, müssen sie in solchen Lösungsmitteln löslich sein, die in Fertigungslinien ohne Umweltprobleme eingesetzt werden können. Ein weiteres Erfordernis besteht darin, daß die Polymerschichten auf den in der Mikroelektronik verwendeten Substraten gut haften müssen. Keine dieser beiden Anforderungen wird jedoch durch Polyphenylchinoxaline erfüllt. Diese Polymeren sind nämlich nur in stark toxischen phenolischen Lösungsmitteln, wie Kresol, oder chlorierten Kohlenwasserstoffen löslich und zeigen eine unzureichende Haftung auf typischen Halbleiteroberflächen, wie Siliciumoxid und Siliciumnitrid.

Aufgabe der Erfindung ist es, Polymere bereitzustellen, die zur Herstellung hochwärmebeständiger organischer Dielektrika mit guten thermischen und elektrischen Eigenschaften dienen können und dabei in untoxischen Lösungsmitteln verarbeitet werden können.

Dies wird erfindungsgemäß durch polare Partialstrukturen aufweisende Phenylchinoxalin-Copolymere der folgenden allgemeinen Formel erreicht: 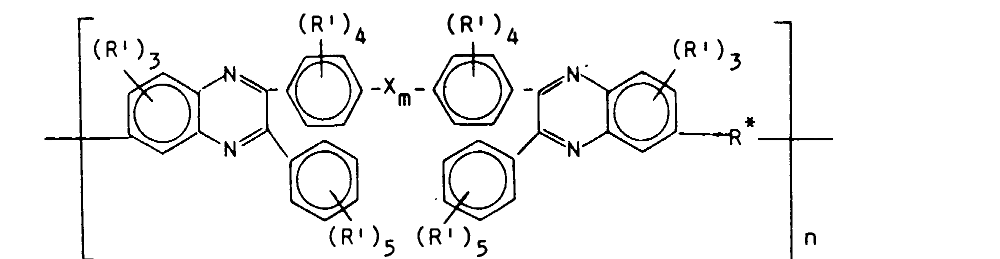 mit m = 0 oder 1 und n = 1 bis 10 ,
wobei folgendes gilt:
X =-O- , -CO- , -S- , -SO₂- , -(CF₂)ₚ- , 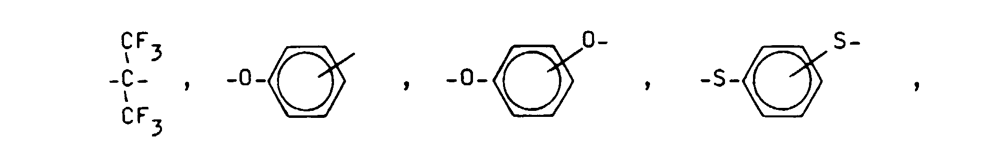 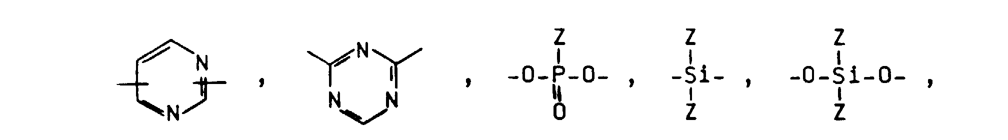 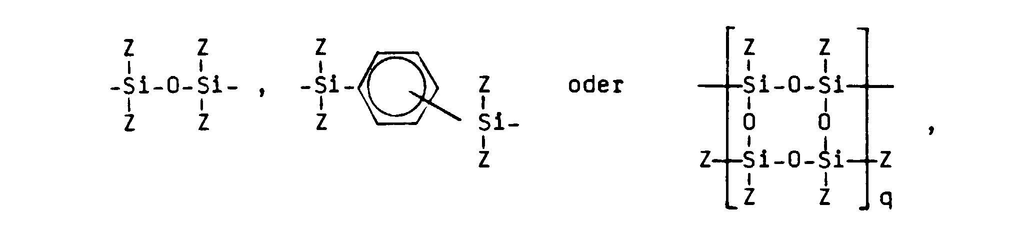 mit p = 1 bis 18 und q = 1 bis 10,
und Z = Alkyl mit 1 bis 10 C-Atomen oder Aryl;
R' =H, F oder Cl; 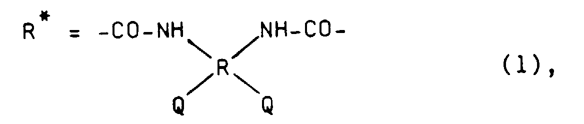 mit Q = H oder OR" ,
wobei R" Wasserstoff (H) oder ein olefinisch ungesättigter Rest ist,
und wobei der an der aromatischen Gruppierung zur CO-Gruppe benachbarte Rest R' eine COOH-Gruppe sein kann, 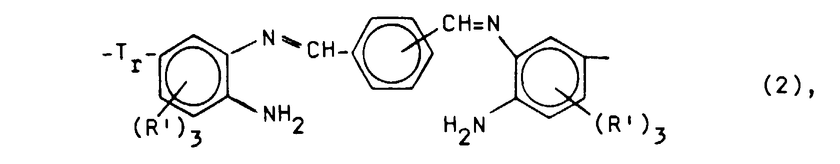 mit r = 0 oder 1,
und T = -O- , -CO- oder 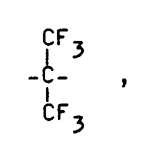 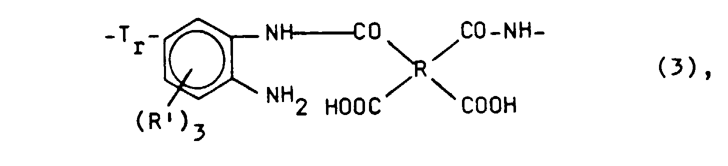 wobei folgendes gilt: 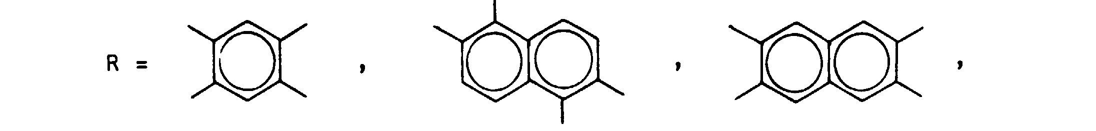 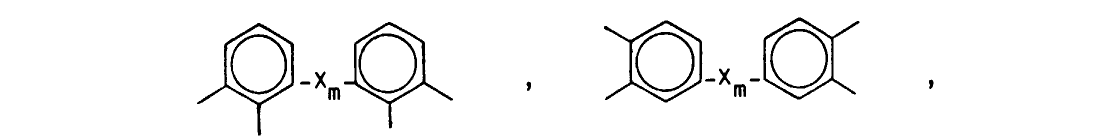 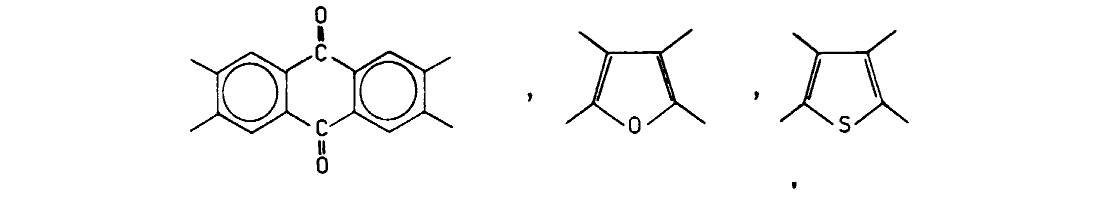 oder

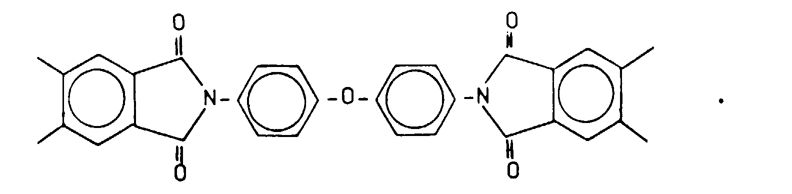

Die erfindungsgemäßen Copolymeren weisen - neben Phenylchinoxalin-Strukturen - Vorstufen von Oxazolen (1), Imiden (1), Imidazolen (2) und sogenannten Pyronen (3), d.h. Imidazopyrrolonen, als Cokomponente mit polaren Partialstrukturen auf. Diese Copolymeren zeigen, unter weitgehender Erhaltung der guten thermischen und elektrischen Eigenschaften von Polyphenylchinoxalinen, eine gute Löslichkeit in gängigen untoxischen Lösungsmitteln, wie γ-Butyrolacton und N-Methylpyrrolidon, sowie eine gute Haftung auf Halbleitersubstraten, wie Siliciumoxid und -nitrid. Die Verarbeitbarkeit in untoxischen Lösungsmitteln und die verbesserte Haftung auf Halbleitersubstraten wird durch die Einführung der polaren Partialstrukturen erreicht.

Die Copolymeren nach der Erfindung cyclisieren beim Erhitzen auf ca. 400°C und werden - unter Ausbildung von Benzoxazol-, Imid-, Benzimidazol- und Pyron-Partialstrukturen - in allen organischen Lösungsmitteln unlöslich. Nach der Cyclisierung bleibt dabei überraschenderweise das gute thermische und elektrische Eigenschaftsspektrum von Polyphenylchinoxalin erhalten. Diese Copolymeren eignen sich deshalb in hervorragender Weise zur Herstellung hochwärmebeständiger Dielektrika. Im Vergleich zu Polyimiden ist ferner von Vorteil, daß die Reduzierung der Schichtdicke lediglich 10 bis 20 % beträgt und damit deutlich unter derjenigen der Polyimide mit 30 bis 50 % liegt.

Die erfindungsgemäßen Copolymeren weisen ferner den Vorteil auf, daß sich durch Einführung photoreaktiver Gruppen, beispielsweise durch Addition ungesättigter Epoxide an OH-, NH₂- oder COOH-Gruppen, photosensitive Vorstufen herstellen lassen. R" stellt dabei vorzugsweise einen der folgenden olefinisch ungesättigten Reste dar:
R" = -A-O-CH₂-CH=CH₂ , 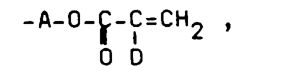 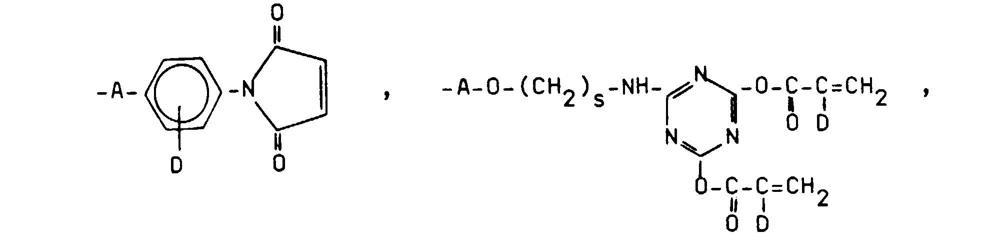 oder 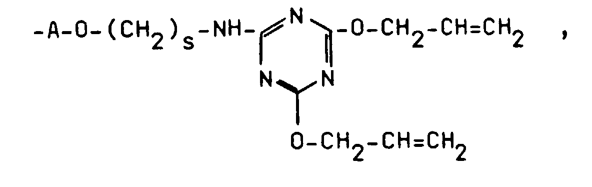 mit A = -CH₂- und 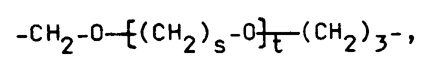 D = H, CH₃, Cl, Br und CN,
und s = 2 bis 16,
t = 1 bis 10.

Wie bereits ausgeführt, führt die Cyclisierung der erfindungsgemäßen Copolymeren zu Copolymeren mit Benzoxazol-, Imid-, Benzimidazol- oder Pyron-Strukturen. Diese Copolymeren weisen beispielsweise folgenden Aufbau auf:

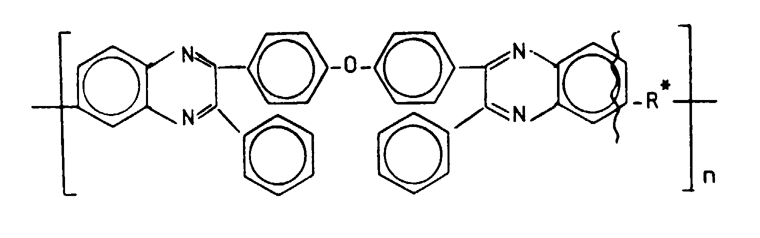

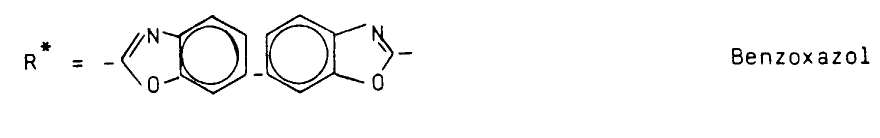

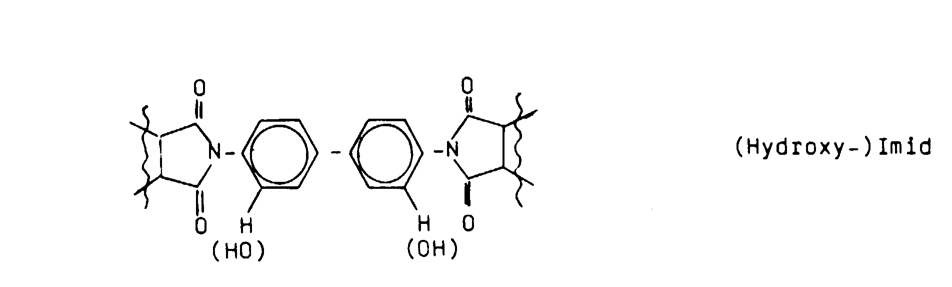

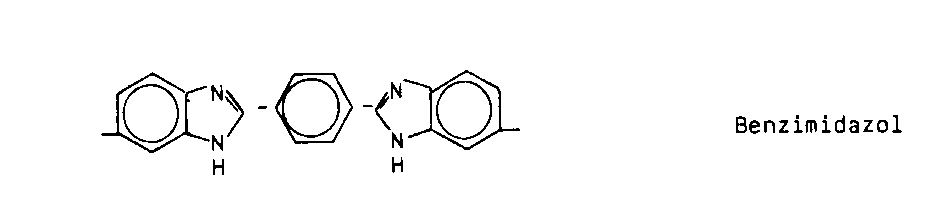

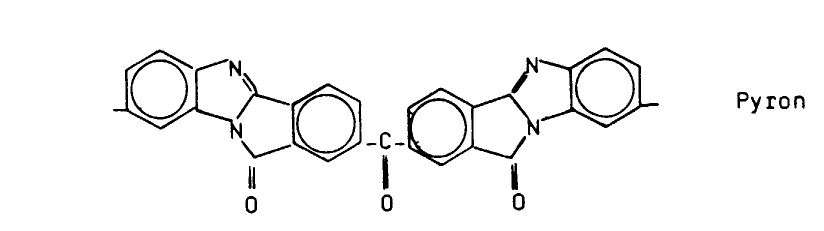

Im Falle der Herstellung von Copolymeren mit Imid-Strukturen muß dabei - im Ausgangscopolymer - derjenige Rest R' an der aromatischen Gruppierung, der zur CO-NH-Gruppe benachbart ist, eine COOH-Gruppe sein. Dies bedeutet, daß die aromatische Gruppierung in diesem Fall lediglich zwei Reste R' aufweist, welche H, F oder Cl sind.

Anhand von Ausführungsbeispielen soll die Erfindung noch näher erläutert werden.

### Beispiel 1

### Copolymer aus Phenylchinoxalin und einer Benzoxazol-Vorstufe

Durch Kondensation von Oxydibenzil (1 mol) mit 3,4-Diaminobenzoesäure (2 mol) wird eine Dicarbonsäure mit Phenylchinoxalineinheiten erhalten. Aus dieser Dicarbonsäure wird das entsprechende Säurechlorid hergestellt. Dazu kann Thionylchlorid dienen. Das Dicarbonsäurechlorid wird anschließend mit 3,3'-Dihydroxy-4,4'-diaminobiphenyl (1 mol) zu einem Copolymer umgesetzt, das sowohl Phenylchinoxalineinheiten als auch o-Hydroxy-amid-Gruppierungen (-CO-NH-) aufweist. Die Herstellung des Copolymers kann im übrigen auch mittels einer sogenannten chloridfreien Synthese erfolgen (siehe dazu EP-OS 0 391 196).

Aus einer Lösung des Copolymers lassen sich Lackfilme herstellen, die beim Tempern bei ca. 400°C Wasser abspalten, wobei die o-Hydroxy-amid-Gruppierungen zu Benzoxazol-Strukturen cyclisieren.

### Beispiel 2

### Copolymer aus Phenylchinoxalin und einer Imid-Vorstufe

Es wird entsprechend Beispiel 1 vorgegangen, wobei anstelle von 3,4-Diaminobenzoesäure 4,5-Diaminophthalsäure und anstelle von 3,3'-Dihydroxy-4,4'-diaminobiphenyl 4,4'-Diaminobiphenyl verwendet wird. Über eine Tetracarbonsäure bzw. das entsprechende Säurechlorid als Zwischenstufe wird dabei ein Copolymer mit Phenylchinoxalineinheiten und o-Carboxy-amid-Gruppierungen (-CO-NH-) erhalten, die beim Tempern auf ca. 400°C zu Imid-Strukturen cyclisieren.

Wird anstelle von 4,4'-Diaminobiphenyl 3,3'-Dihydroxy-4,4'-diaminobiphenyl eingesetzt, so wird in entsprechender Weise ein Copolymer mit Hydroxyimid-Strukturen erhalten.

### Beispiel 3

### Copolymer aus Phenylchinoxalin und einer Benzimidazol-Vorstufe

Durch Kondensation von Oxydibenzil und Isophthalaldehyd (Molverhältnis 1:1) mit der doppelten molaren Menge 3,3',4,4'-Tetraaminobiphenyl in einem geeigneten Lösungsmittel, wie N-Methylpyrrolidon, wird ein lösliches Copolymer erhalten, das sowohl Phenylchinoxalineinheiten als auch o-Amino-azomethinGruppierungen (-N=CH-) aufweist.

Das Copolymer läßt sich zu Filmen verarbeiten. Beim Tempern der Polymerfilme bei ca. 400°C erfolgt eine Cyclisierung der o-Amino-azomethin-Gruppierungen zu Benzimidazol-Strukturen.

### Beispiel 4

### Copolymer aus Phenylchinoxalin und einer Pyron-Vorstufe

3,3',4,4'-Tetraaminobiphenyl und Benzophenontetracarbonsäuredianhydrid werden im Molverhältnis 6:1 zu einer oligomeren Amidocarbonsäure mit endständigen o-Diaminofunktionen umgesetzt. Diese Amidocarbonsäure wird anschließend mit Oxydibenzil im Molverhältnis 6:5 zu einem Copolymer kondensiert, das sowohl Phenylchinoxalineinheiten als auch o-Amino-o'-carboxyamid-Gruppierungen (-CO-NH-) aufweist.

Aus dem Copolymer hergestellte Filme spalten beim Tempern bei ca. 400°C Wasser ab, wobei die o-Amino-o'-carboxy-amid-Gruppierungen zu Pyron-Strukturen cyclisieren.

Sämtliche der vorstehend beschriebenen Copolymeren sind in stark polaren Lösungsmitteln, wie Dimethylformamid, Dimethylsulfoxid, Dimethylacetamid und N-Methylpyrrolidon, sehr gut löslich. Die Beschichtung der Substrate, beispielsweise Siliciumwafer, die mit Lösungen der Copolymeren in N-Methylpyrrolidon durchgeführt wurde, erfolgte durch Aufschleudern. Die Lackfilme wurden 1 h bei ca. 70°C getrocknet und anschließend 1 h bei ca. 400°C getempert.

Im Gegensatz zu Phenylchinoxalin-Polymeren erfolgt bei den Copolymeren beim Tempern ein Schichtdickenverlust, da hier teilweise nicht-cyclisierte Prepolymereinheiten vorliegen, die erst durch den Temperprozeß (400°C/l h) in die hochwärmebeständigen Strukturen übergeführt werden. Der hierbei erfolgende Volumenschrumpf ist mit ca. 10 bis 20 % deutlich geringer als bei Polyimiden mit 30 bis 50 %.

Die Copolymeren nach der Erfindung zeichnen sich - im Vergleich zu Polyimiden - durch eine deutlich höhere thermische Beständigkeit aus. Erst oberhalb einer Temperatur von 500°C tritt nämlich ein Gewichtsverlust auf. Das Temperaturverhalten wurde thermogravimetrisch ermittelt, wobei mit einer Heizrate von 10°C/min von Raumtemperatur auf 700°C aufgeheizt und dabei der Gewichtsverlust aufgezeichnet wurde.

Die erfindungsgemäßen Copolymeren verfügen über sehr gute Isolationseigenschaften. Es wurden folgende elektrische Kennwerte ermittelt:

| Copolymer | ε | tang δ . 10³ | ρ(Ω·cm) |
|---|---|---|---|
| Beispiel 1 | 3,03 | 1,3 | 1,3.10¹⁸ |
| Beispiel 3 | 3,33 | 3,25 | 7.10¹⁷ |
| Beispiel 4 | 3,08 | 2,0 | 1,6.10¹⁸ |

Die Bestimmung der dielektrischen Eigenschaften erfolgte durch eine Kapazitätsmessung bei 25°C (Luftfeuchtigkeit: 0 %) mit einer Meßfrequenz von 1 kHz. Dabei wurde ein Polymerfilm auf einen Cr/Ni-beschichteten Siliciumwafer aufgebracht und eine Goldschicht als Gegenelektrode aufgedampft; die Filmdicke betrug ca. 6 µm.

Die Copolymeren nach der Erfindung verhalten sich bezüglich der thermischen und dielektrischen Kennwerte ähnlich wie Phenylchinoxalin-Polymere. Diese Copolymeren zeigen, aufgrund der solubilisierenden OH-, NH₂- und COOH-Gruppen, zudem eine gute Löslichkeit in nicht-toxischen Lösungsmitteln, wie γ-Butyrolacton und N-Methylpyrrolidon. Die polaren Gruppen in den Copolymeren bewirken zugleich eine Verbesserung der Haftungseigenschaften auf Substratoberflächen, wie SiO₂ und Si₃N₄.

Die erfindungsgemäßen Copolymeren weisen ferner den Vorteil auf, daß sie einer Photostrukturierung zugänglich sind. Diese kann indirekt in Zweilagentechnik mit O₂/RIE erfolgen oder direkt mit photosensitiv eingestellten Vorstufen. Dabei werden Mischungen aus den chemisch gebundene, photoreaktive Gruppen aufweisenden Copolymeren mit Sensibilisatoren und/oder Photoinitiatoren eingesetzt, wobei eine positive oder negative Strukturierung mittels Licht erfolgt, vorzugsweise mit einer Wellenlänge > 400 nm. Als Sensibilisatoren können beispielsweise Verbindungen auf Diazochinon- bzw. Diazoketonbasis eingesetzt werden, wie sie in gängigen Positivlacken Verwendung finden.

## Patentansprüche

1. Phenylchinoxalin-Copolymere mit polaren Partialstrukturen der allgemeinen Formel 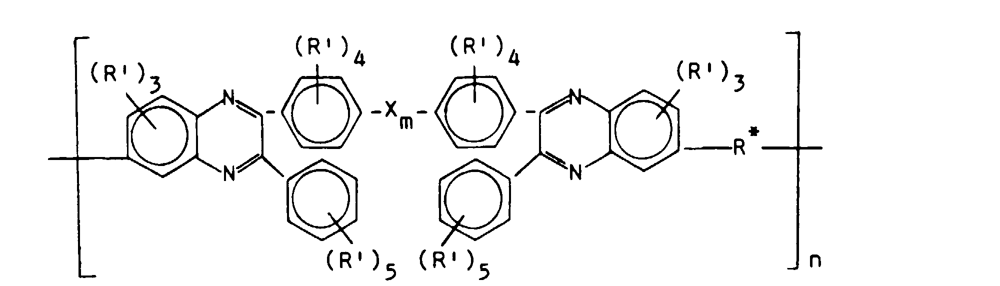 mit m = 0 oder 1 und n = 1 bis 10 ,
wobei folgendes gilt:
X =-O- , -CO- , -S- , -SO₂- , -(CF₂)ₚ- , 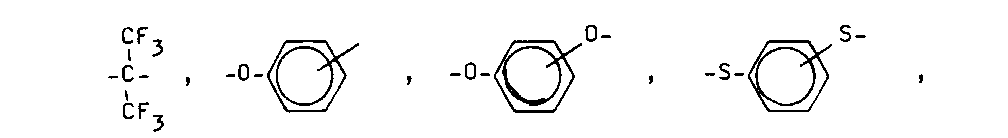 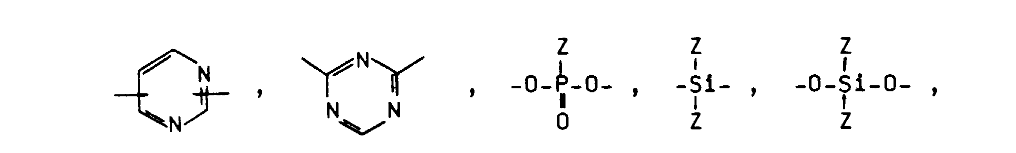 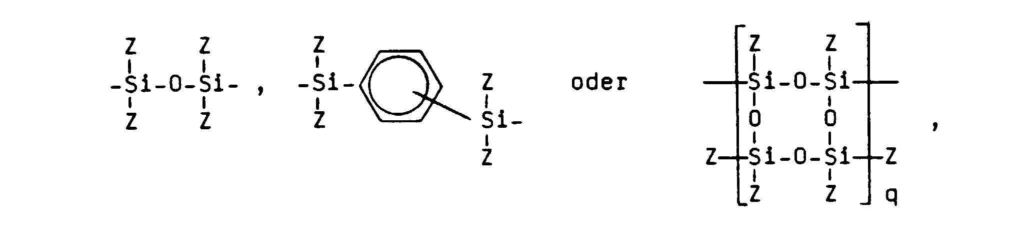 mit p = 1 bis 18 und q = 1 bis 10,
und Z = Alkyl mit 1 bis 10 C-Atomen oder Aryl;
R' =H, F oder Cl; 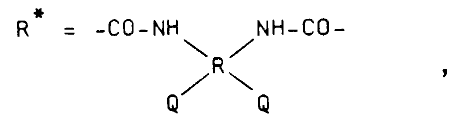 mit Q = H oder OR" ,
wobei R" Wasserstoff (H) oder ein olefinisch ungesättigter Rest ist,
und wobei der an der aromatischen Gruppierung zur CO-Gruppe benachbarte Rest R' eine COOH-Gruppe sein kann, 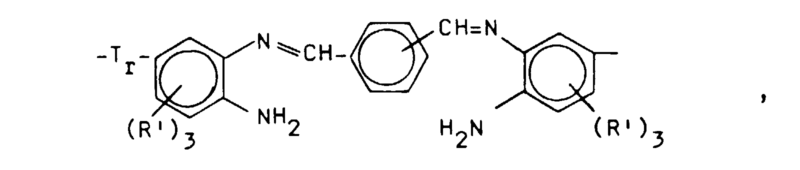 mit r = 0 oder 1,
und T = -O- , -CO- oder 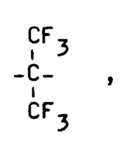 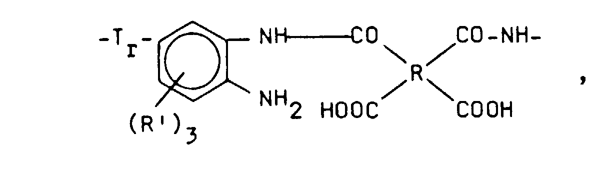 wobei folgendes gilt: 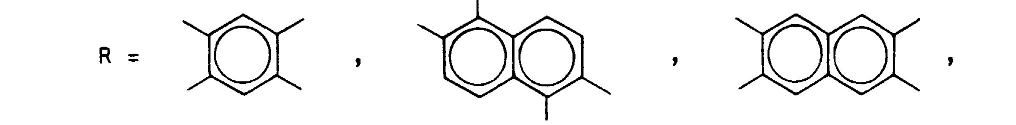 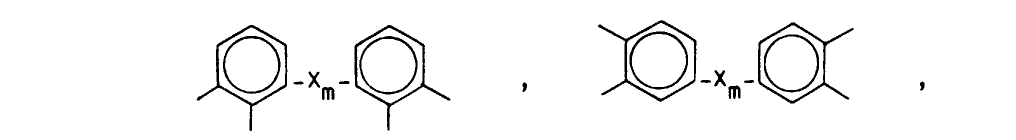 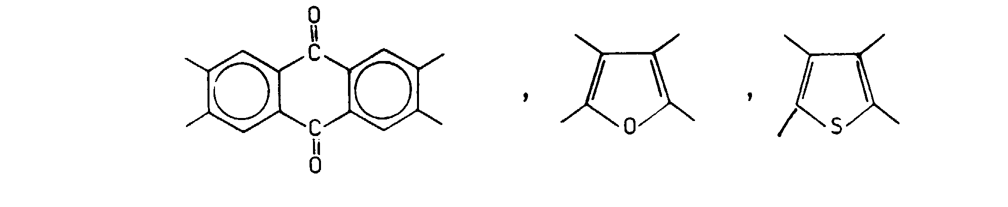 oder

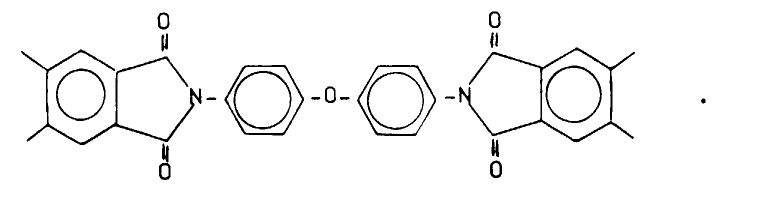

2. Phenylchinoxalin-Copolymere nach Anspruch 1, **dadurch gekennzeichnet**, daß für R" folgendes gilt:
R" = -A-O-CH₂-CH=CH₂ , 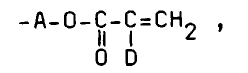 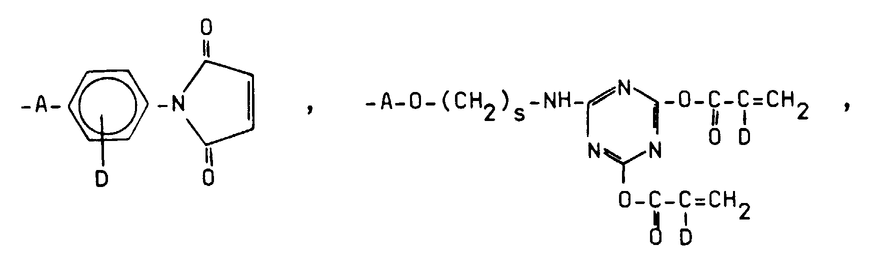 oder 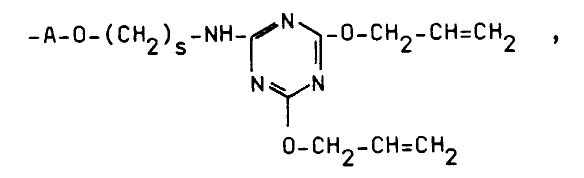 mit A = -CH₂- und 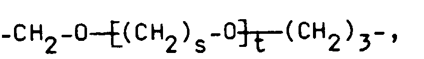 D = H, CH₃, Cl, Br und CN,
und s = 2 bis 16,
t = 1 bis 10.

3. Verwendung der Phenylchinoxalin-Copolymere nach Anspruch 1 oder 2 zur Herstellung hochwärmebeständiger Dielektrika.

## Claims

1. Phenylquinoxaline copolymers having polar partial structures and having the general formula: 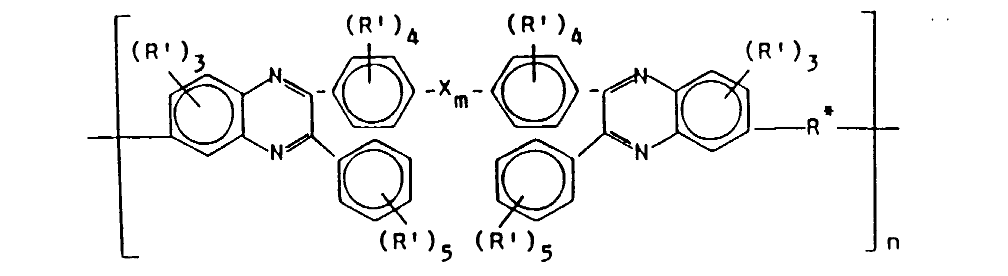 where m = 0 or 1 and n = 1 to 10,
wherein:
X = -O- , -CO- , -S- , -SO₂-, -(CF₂)ₚ*-,* 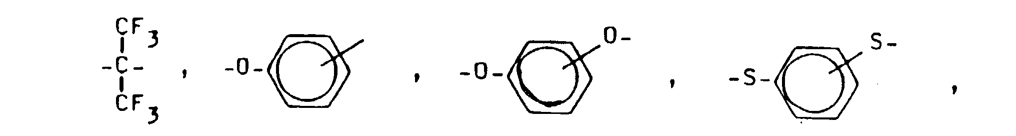 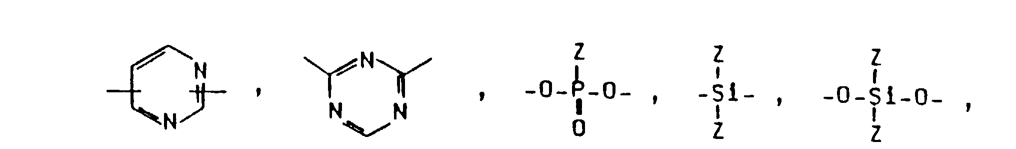 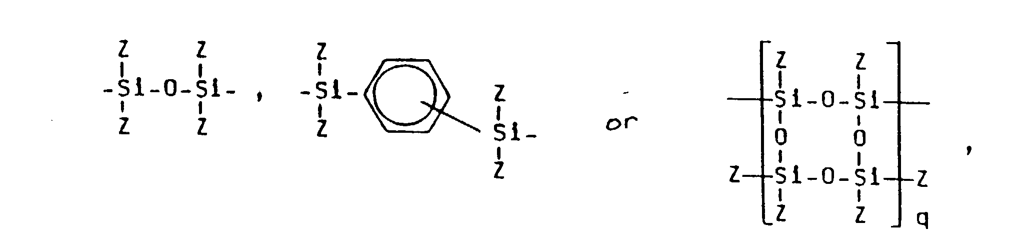 where p = 1 to 18 and q = 1 to 10,
and Z = alkyl with 1 to 10 C atoms, or aryl,
R' = H, F or Cl; 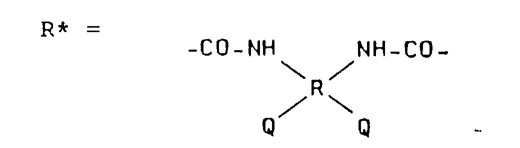 where Q = H or OR",
wherein R" can be hydrogen (H) or an olefinically unsaturated residue,
and wherein the R' residue on the aromatic grouping adjacent to the CO- group can be a COOH- group, 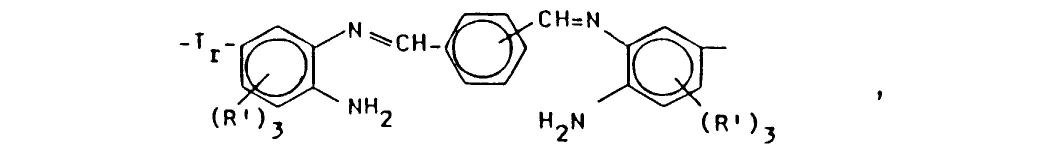 where r = 0 or 1,
and T = -O- , -CO- or -C(CF₃)₂- , 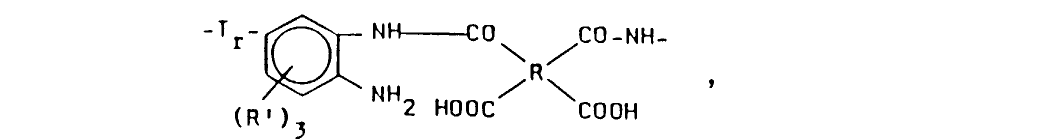 wherein:

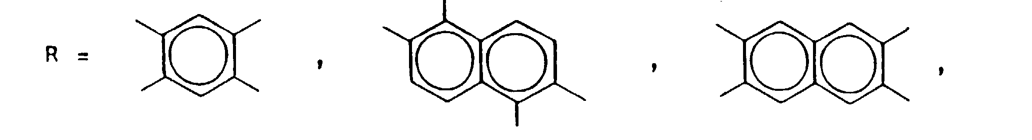

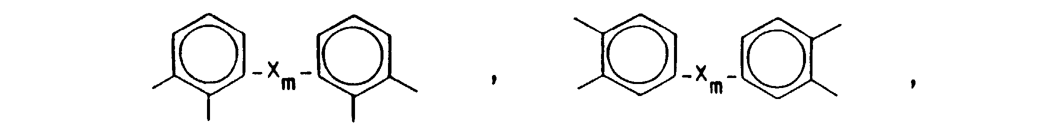

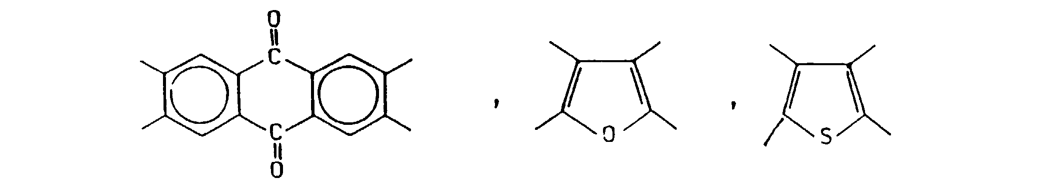

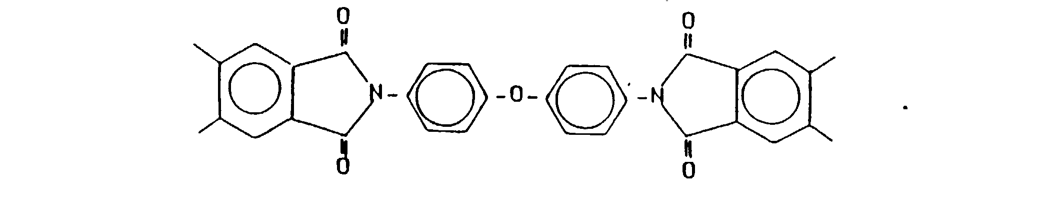

2. Phenylquinoxaline copoymers according to claim 1, characterised in that the following applies for R":
R" = -A-O-CH₂-CH=CH₂ , 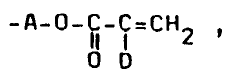 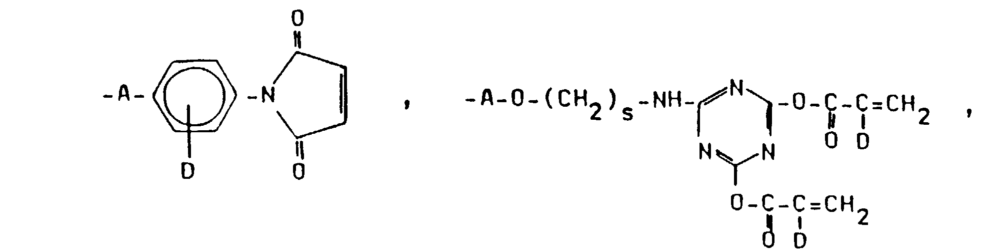 or 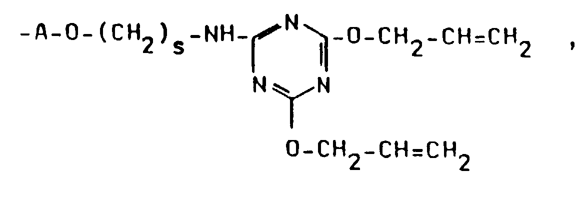 where A = -CH₂- and 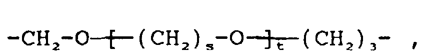 D = H, CH₃, Cl, Br and CN,
and s = 2 to 16,
t = 1 to 10.

3. Use of the phenylquinoxaline copolymers according to claim 1 or claim 2 for the production of highly heat-resistant dielectrics.

## Revendications

1. Copolymères de phénylquinoxaline avec des structures partielles polaires de formule générale : 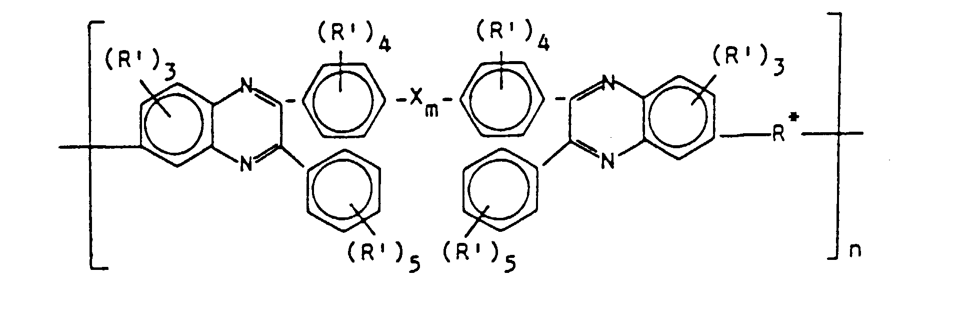 avec m = 0 ou 1 et n = 1 à 10,
où ce qui suit représente :
X = -O-, -CO-, -S-, -SO₂-, -(CF₂)ₚ-, 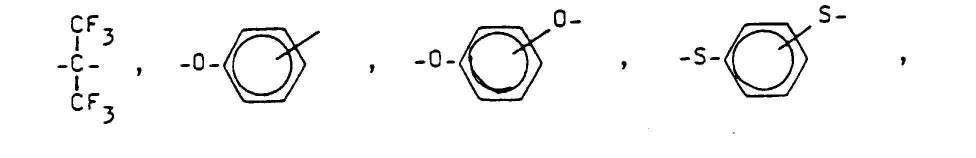 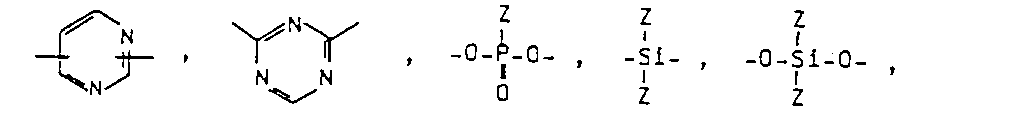 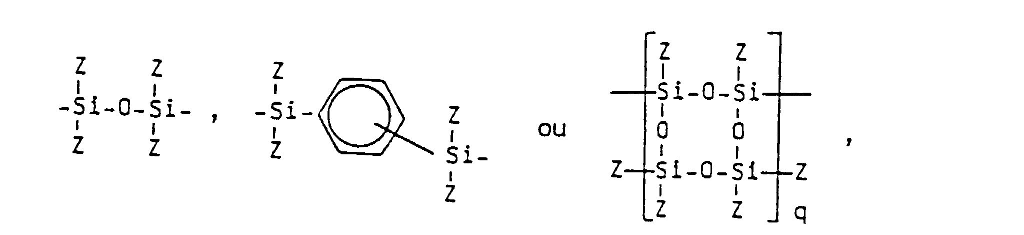 avec p = 1 à 18 et q = 1 à 10,
et Z = alkyle avec 1 à 10 atomes de carbone ou aryle; R'= H, F ou Cl; 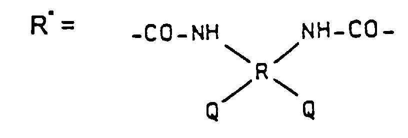 avec Q = H ou OR",
où R" est hydrogène (H) ou un radical oléfiniquement insaturé, et où le radical R' sur le groupement aromatique voisin du groupe CO- peut être un groupe -COOH, 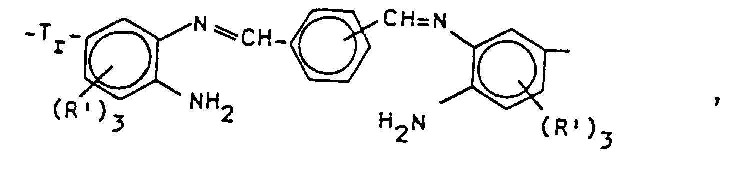 avec r = 0 ou 1,
et T = -O-, -CO- ou -C(CF₃)₂-, 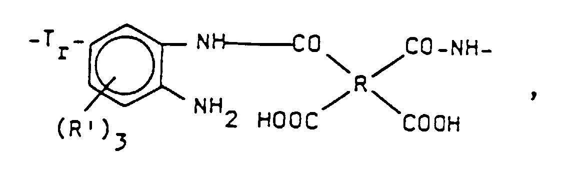 où ce qui suit représente :

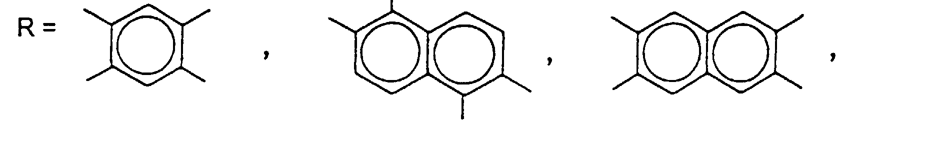

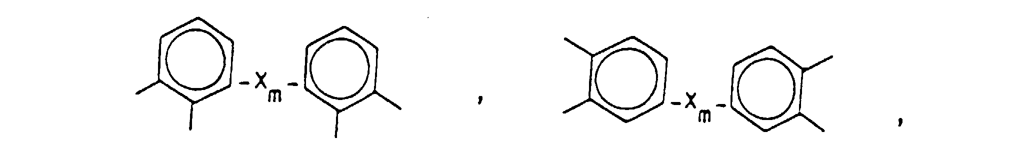

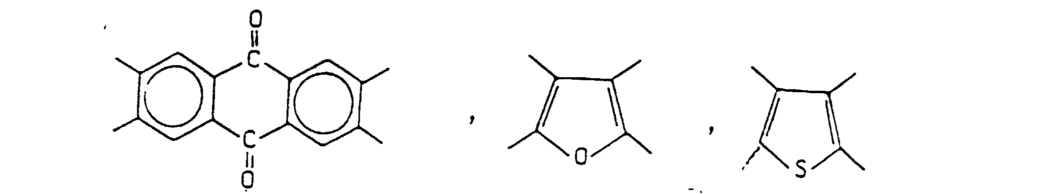

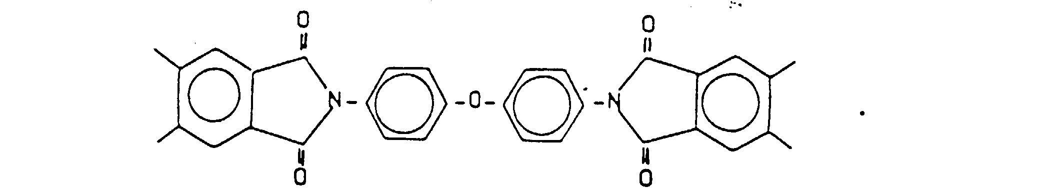

2. Copolymères de phénylquinoxaline suivant la revendication 1, caractérisés en ce que R" représente :
R"= -A-O-CH₂-CH=CH₂ , 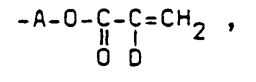 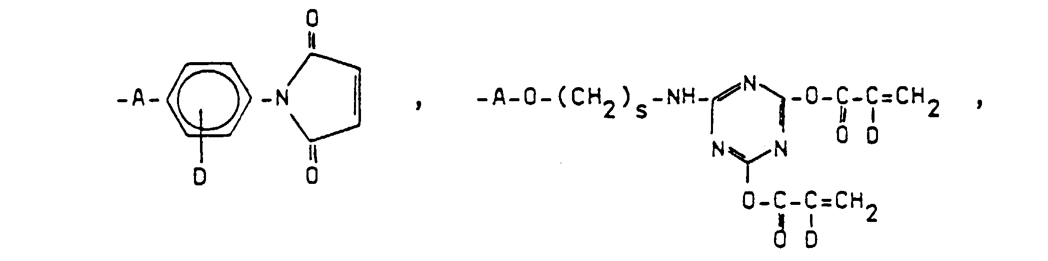 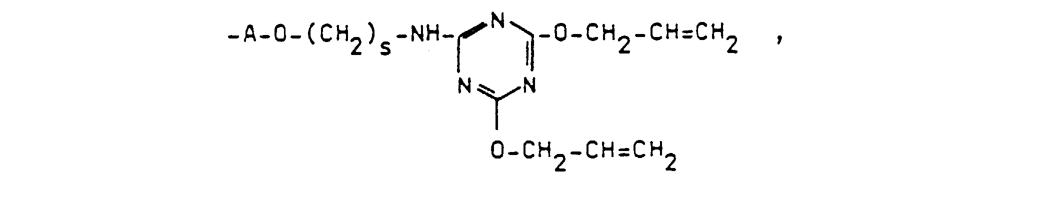 avec A = -CH₂- et -CH₂-O-[(CH₂)ₛ-O]ₜ -(CH₂)₃-,
D = H, CH₃, Cl, Br et CN,
et s = 2 à 16,
t = 1 à 10.

3. Utilisation des copolymères de phénylquinoxaline suivant la revendication 1 ou 2, pour préparer des matériaux diélectriques stables à haute température.
